# FASCICULE DE BREVET EUROPEEN

(11) **EP 1 908 305 B1**
(45) Date de publication et mention de la délivrance du brevet: **27.05.2009**
(21) Numéro de dépôt: 06777654.2
(22) Date de dépôt: 07.07.2006
(51) Int. Cl.: H04N 17/00, G06F 11/14

(54) **PROCEDE DE DETECTION D'ERREURS LORS DE L'INITIALISATION D'UN APPAREIL ELECTRONIQUE ET APPAREIL IMPLEMENTANT LE PROCEDE**
VERFAHREN ZUM DETEKTIEREN VON FEHLERN WÄHREND DER INITIALISIERUNG EINES ELEKTRONISCHEN GERÄTS UND VORRICHTUNG DAFÜR
METHOD FOR DETECTING ERRORS DURING INITIALIZATION OF AN ELECTRONIC APPLIANCE AND APPARATUS THEREFOR

(30) Priorité: 11.07.2005 FR 0552135
(43) Date de publication de la demande: 09.04.2008
(73) Titulaire: Thomson Licensing, 92100 Boulogne-Billancourt (FR)
(72) Inventeur: QUERE, Thierry, F-35160 Montfort Sur Meu (FR); CARBONNEL, Louis-Xavier, F-35740 Pace (FR); COLMAGRO, Jean-Claude, F-35250 Mouaze (FR)
(74) Mandataire: Le Dantec, Claude
(86) Numéro de dépôt international: PCT/EP2006/064024
(87) Numéro de publication internationale: WO 2007/006758

(56) Documents cités:
- EP-A- 1 351 144
- EP-A- 1 494 119
- WO-A-01/09722
- US-A- 5 432 927
- US-B1- 6 230 285
- US-B1- 6 393 585

## Description

### 1. Domaine de l'invention.

La présente invention concerne le domaine de l'initialisation des appareils électroniques et plus précisément la détection de problèmes survenant lors des phases d'initialisation d'un système d'exploitation embarqué sur l'appareil.

### 2. Arrière-plan technologique.

Le schéma d'initialisation d'un appareil électronique muni d'un système d'exploitation est généralement le suivant.

Dans une première phase, un noyau de système est chargé en mémoire et exécuté. Ce noyau est généralement conçu comme minimal, il va offrir les fonctions minimales de première utilité comme le gestionnaire de mémoire, et l'ordonnanceur de tâches. Ce noyau est normalement conçu statiquement de façon à ce que son initialisation et son lancement soient reproductibles. De ce fait, à moins d'une panne matérielle, le succès de l'initialisation du noyau est acquis.

Dans une deuxième phase, un certain nombre de services sont lancés. Ces services apportent les fonctionnalités plus élaborées du système. Ils reposent sur le noyau. Ces services vont par exemple apporter la gestion des périphériques, la gestion éventuelle des couches de communication de l'appareil avec le monde extérieurs, périphériques d'entrées/sorties, réseau ou autre. Ces services peuvent également comprendre la gestion de préférences utilisateurs ainsi que la reprise de paramètres de configuration sauvegardés lors d'une précédente utilisation de l'appareil ainsi que tout service en relation avec la destination particulière de l'appareil.

La complexité de ces services et la prise en compte de paramètres utilisateurs et de l'environnement de l'appareil font qu'il est beaucoup plus difficile de garantir l'achèvement de cette phase. En effet tous les cas de figures ne peuvent pas être testés et l'occurrence d'une erreur est toujours possible.

Dans une troisième phase, une fois que tous les services constituant le système sont lancés, un applicatif est également lancé. C'est cet applicatif qui va finaliser les fonctionnalités de l'appareil dans son environnement. Cet applicatif est lancé sur un système d'exploitation complet et opérationnel. Le système offre généralement la possibilité de corriger une erreur survenant dans l'applicatif. Bien souvent, il suffit de relancer ce dernier.

On voit donc que les erreurs les plus critiques sont celles survenant pendant la deuxième phase, celle de lancement des services. Des procédés existent pour tenter de faire face à ces erreurs. Par exemple dans le monde des ordinateurs personnels, les systèmes offrent généralement plusieurs modes de lancement dont un mode dit « sans erreur » consistant à lancer un système minimal. Ce système minimal ne tente généralement pas l'initialisation des services et offre une interface à l'utilisateur pour corriger les paramètres de lancement de ces services. De cette façon, confronté à une erreur d'initialisation, l'utilisateur est à même de corriger la cause de cette erreur pour retrouver un appareil utilisable. Cette correction pouvant aller jusqu'au remplacement complet du système. Ce procédé fonctionne correctement dans le monde des ordinateurs mais nécessite de la part de l'utilisateur certaines compétences ainsi qu'une indulgence vis à vis de ces problèmes.

Par contre dans le domaine de l'électronique dite « grand public » il n'est pas envisageable d'appliquer des procédés équivalents. D'une part, l'utilisateur d'un appareil grand public n'est pas préparé à admettre facilement les disfonctionnements de l'appareil. Il est en effet habitué à des appareils n'offrant pas le même niveau de complexité et généralement exempts de disfonctionnement. On ne peut pas également demander à cet utilisateur les compétences nécessaires à une correction « à la main » des problèmes potentiels.

Une première mesure permettant de corriger les erreurs est la possibilité de mettre à jour le système. Cette possibilité existe sur de nombreux appareils. Par exemple, les appareils pouvant se connectés à un ordinateur personnel peuvent souvent être mis à jour par des versions de systèmes depuis cet ordinateur. Les appareils de réception de télévision numériques peuvent également généralement être mis à jour par réception de nouvelles versions de logiciel système. Ce procédé permet de pallier aux erreurs de conception des systèmes ou à la corruption de l'image mémoire de ce système ou d'apporter de nouvelles fonctionnalités. La prise de décision du déclenchement du téléchargement se fait généralement en fonction d'un certain nombre de critères. On peut citer parmi ceux-ci la présence d'une nouvelle version de logiciel résident où la détection d'une version corrompue du logiciel présent dans l'appareil.

Le document US 6 393 585 semble divulguer le lancement d'un terminal selon une telle méthode. Selon ce document lors d'un démarrage on charge et lance une première application et que si un problème survient on charge une autre application. Une telle méthode ne permet pas une prise en compte fine d'un problème de démarrage.

Le document EP-A-1 494 119 (Thomson Multimedia Broadband Belgium) divulgue une méthode d'avertissement, pour un appareil dans un réseau, d'une erreur survenue sur l'appareil après ou lors téléchargement d'un OS ou lors l'exécution d'un OS téléchargé. La méthode s'applique à des appareils qui n'ont pas assez de mémoire pour stocker plusieurs versions d'un logiciel au même temps.

Le document US-B1-6 230 285 (Sadowsky et al) divulgue une méthode d'optimisation de robustesse d'un récepteur démarrant d'un secteur de démarrage d'un médium de stockage. La méthode comprend un agent qui surveille les changements des fichiers du système d'exploitation pendant le démarrage et qui stocke les changements dans un fichier de différences. Un module de vérification de démarrage vérifie lors d'un démarrage si une erreur est survenue lors d'un précédent démarrage. Lorsqu'une telle erreur est détectée, le module de réparation est exécuté, et analyse le fichier de différences pour déterminer la cause de l'erreur.

Une autre mesure pour prendre en compte les erreurs sur les appareils grand public est l'apport d'une possibilité de redémarrage de l'appareil. Ce redémarrage pouvant être automatique ou commandé par une action spécifique de l'utilisateur. Cette mesure de redémarrage permet de relancer le système et de faire face aux erreurs survenant lors de l'utilisation de l'appareil.

Il se peut donc que les critères pour déclencher le téléchargement d'une nouvelle version de logiciel ne soient pas remplis mais que la phase d'initialisation des services du système conduise à un problème. Dans ce cas le problème provoque un redémarrage du système. Il se produit alors une suite de redémarrages conduisant tous à une erreur et donc à un nouveau redémarrage.

### 3. Résumé de l'invention.

L'invention permet de détecter les problèmes survenant lors de la phase de lancement du logiciel résident d'un appareil électronique, la phase de lancement étant découpées en plusieurs étapes ou modules. Cette détection se fait au moyen d'informations et inscrites en mémoire non volatile au cours de cette phase et avant le lancement de chaque module. Ces informations sont ensuite effacées en cas de succès. En cas d'échec, il est donc possible, lors du redémarrage suivant, d'utiliser ces informations pour détecter le problème et le module associé. On bénéficie ainsi d'une grande finesse dans la détection d'un problème pouvant survenir lors du démarrage.

L'invention concerne un procédé de détection d'erreurs survenant lors du démarrage d'un appareil électronique comportant de la mémoire permanente, cet appareil étant piloté par un logiciel résident, **caractérisé en ce que** le logiciel résident comprenant une pluralité de modules lancés successivement lors d'un démarrage, ledit procédé comprend au moins les étapes suivantes :
- lors d'un premier démarrage du logiciel résident, pour chaque module, au moins une étape d'inscription d'information représentative du lancement dudit module, dans la mémoire de l'appareil avant le lancement dudit module ;
- si ledit premier démarrage est sans erreur, une étape d'effacement de ladite information, pour tous les modules lancés ;
- lors d'un second démarrage du logiciel résident, une étape de détection d'une erreur survenue lors du premier démarrage en fonction d'une présence de ladite information dans la mémoire.

Selon un mode de réalisation particulier l'étape de détection d'une erreur se fait par la détection de la présence desdites informations inscrites dans la mémoire pendant le processus de démarrage.

Selon un mode de réalisation particulier le procédé comprend en outre le déclenchement d'une alerte suite à la détection d'au moins un démarrage précédent ayant généré une erreur.

Selon un mode de réalisation particulier le procédé comprend en outre une étape de remise à une valeur par défaut d'au moins un paramètre de l'appareil lorsqu'une alerte est déclenchée.

Selon un mode de réalisation particulier le procédé comprend en outre une étape de désactivation du lancement d'au moins un module lors du démarrage suivant de l'appareil lorsqu'une alerte est déclenchée.

Selon un mode de réalisation particulier le procédé comprend en outre une étape provoquant un téléchargement d'une nouvelle version de logiciel résident lorsqu'une alerte est déclenchée.

Selon un mode de réalisation particulier le procédé comprend en outre une étape provoquant l'affichage d'une information à destination de l'utilisateur lorsqu'une alerte est déclenchée.

L'invention concerne également un appareil électronique comportant de la mémoire permanente, un logiciel résident destiné à le piloter, des moyens de lancement du logiciel résident au démarrage de l'appareil **caractérisé en ce que** le logiciel résident comprenant une pluralité de modules lancés successivement lors d'un démarrage, ledit appareil comporte en outre
des moyens d'inscription, dans la mémoire de l'appareil, pour chacun desdits modules, d'information représentative pour le lancement de chacun desdits modules avant le lancement de chaque module lors d'un premier démarrage du logiciel résident et
un moyen d'effacement de ladite information, pour chacun des modules lancés, si ledit premier démarrage est sans erreur et
des moyens de détection, lors d'un second démarrage, d'une erreur survenue lors dudit premier démarrage du logiciel résident en fonction d'une présence de ladite information dans la mémoire.

Selon un mode de réalisation particulier l'appareil comprend en outre des moyens de déclenchement d'une alerte suite à la détection d'au moins un démarrage précédent ayant généré une erreur.

Selon un mode de réalisation particulier l'appareil comprend en outre des moyens de remise à une valeur par défaut d'au moins un paramètre de l'appareil lorsqu'une alerte est déclenchée.

Selon un mode de réalisation particulier l'appareil comprend en outre des moyens de désactivation du lancement d'au moins un module lors du démarrage suivant de l'appareil lorsqu'une alerte est déclenchée.

Selon un mode de réalisation particulier l'appareil comprend en outre des moyens pour provoquer un téléchargement d'une nouvelle version de logiciel résident lorsqu'une alerte est déclenchée.

Selon un mode de réalisation particulier l'appareil comprend en outre des moyens d'affichage d'une information à destination de l'utilisateur lorsqu'une alerte est déclenchée.

### 4. Description des figures.

L'invention sera mieux comprise, et d'autres particularités et avantages apparaîtront à la lecture de la description qui va suivre, la description faisant référence aux dessins annexés parmi lesquels :
La figure 1 illustre un organigramme du procédé selon l'exemple de réalisation de l'invention.
La figure 2 illustre un exemple de réalisation d'un appareil selon l'invention.

### 5. Description détaillée de l'invention.

L'exemple de réalisation de l'invention que nous allons maintenant décrire se place dans le domaine des décodeurs de télévision numérique, mais ne saurait se réduire à ce domaine. Ces décodeurs sont en charge de la réception et du décodage de services de télévision diffusés. La diffusion de ces services peut se faire suivant plusieurs technologies, par exemple satellite, câble, hertzien et plus récemment les réseaux informatiques comme Internet. Ces services sont généralement diffusés sous la forme de flux de données numériques où sont mélangés éventuellement plusieurs services et pour chaque service les différentes composantes du service. Ces composantes peuvent comprendre des composantes audio, des composantes vidéo ainsi que des informations sur le service. On peut trouver également dans le flux des informations permettant l'affichage d'un guide électronique de programmes, des applications interactives et autres. Certaines de ces composantes peuvent être compressées et les services sont généralement encodées de façon à ne pouvoir être utilisées que par des personnes possédant le droit de les visualiser. La visualisation de ces services nécessite l'usage d'un appareil appelé décodeur qui permet la réception du flux numérique diffusé, la séparation des différentes composantes, leur décodage, leur décompression ainsi que leur synchronisation en vue d'une restitution sur, par exemple, un téléviseur. Le décodeur doit également permettre la réception le stockage et l'affichage de données et de programmes annexes comme le guide de programme où des applications telles que des jeux ou autres.

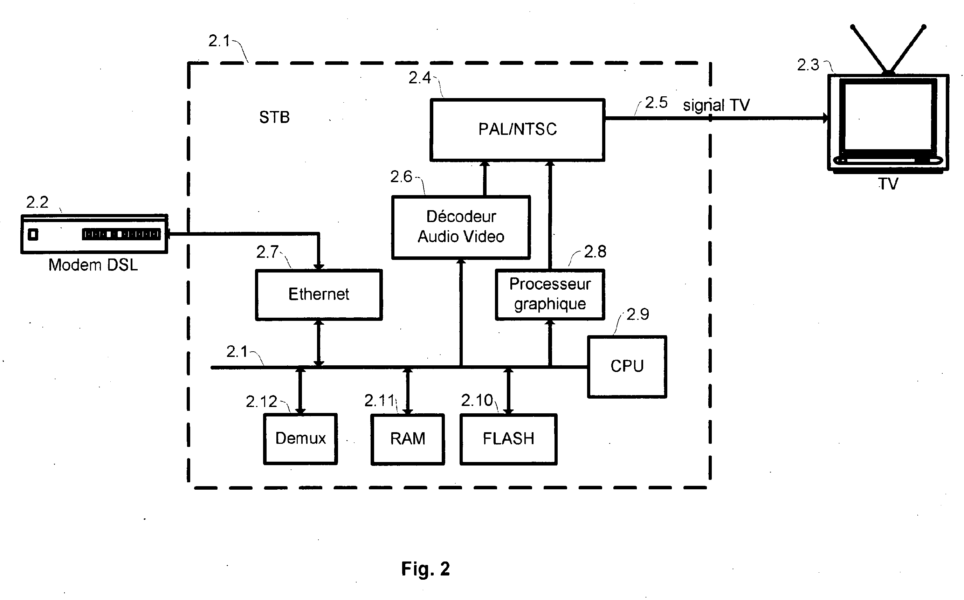

Un exemple d'architecture d'un tel appareil est illustré figure 2. Le décodeur lui-même est matérialisé par le cadre référencé 2.1. Ce décodeur, donné en exemple, est un décodeur recevant des services par un réseau informatique comme Internet. Il se connecte donc via une interface Ethernet référencée 2.7 à un modem, par exemple DSL (« Digital Subscriber Line » en anglais) référencé 2.2 et permettant la connexion en utilisant les lignes téléphoniques. Le flux de données reçu va être démultiplexé par le démux référencé 2.12 après avoir transité sur le bus référencé 2.1 sous le contrôle du processeur 2.9. Les composantes audio et vidéo sont ensuite décodées et/ou décompressées par le décodeur référencé 2.6. D'éventuelles données complémentaires, des menus ou autres seront traitées par le processeur graphique référencé 2.8. Les données issues du décodeur 2.6 et du processeur graphique 2.8 seront transformées en signaux audio et vidéo par le convertisseur numérique analogique référencé 2.4. Ces signaux référencés 2.5 sont produits selon un standard de télévision, par exemple PAL ou NTSC, pour un affichage sur un téléviseur référencé 2.3. Ce décodeur est piloté par le processeur 2.9. Ce processeur permet l'exécution d'un système d'exploitation stocké en mémoire FLASH référencée 2.10. Cette mémoire FLASH présente la caractéristique d'être permanente, les informations qui y sont stockées sont donc gardées en mémoire lors de la mise hors tension de l'appareil. Ce système utilise la mémoire vive (RAM pour « Random Access Memory » en anglais) comme mémoire de travail.

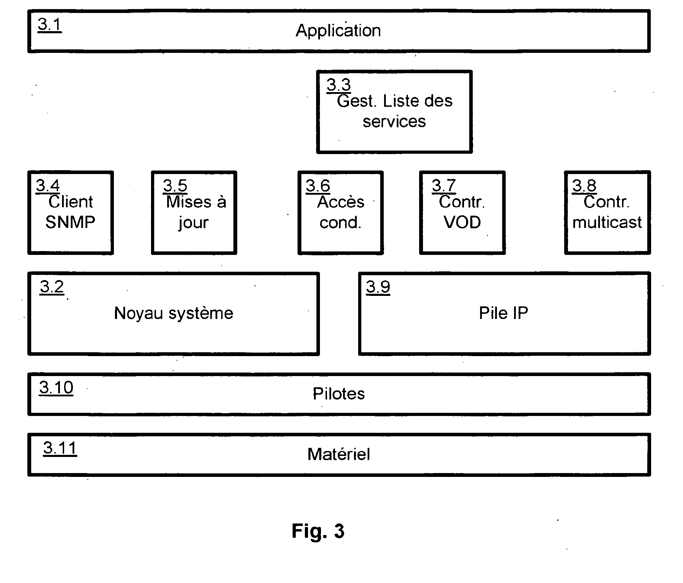

Ce type d'appareil fonctionne généralement sous le contrôle d'une couche logicielle dont un exemple d'architecture est donné par la figure 3. Sur cette figure, le matériel du décodeur est illustré par le cadre référencé 3.11. Une première couche de pilote, référencée 3.10, permet la gestion de ce matériel. Un noyau système, référencé 3.2, implémente les mécanismes de base du système comme le gestionnaire de tâches et son ordonnanceur. La communication du décodeur avec le réseau IP est géré par une pile IP, référencée 3.9. Un certain nombre de modules sont implémenté au dessus du noyau système et pour certain de la couche de communication IP. On peut compter parmi ces modules, de manière non exhaustive, un client SNMP ( « Simple Network Managment Protocol » en anglais), référencé 3.4, servant à permettre une gestion du parc de décodeur depuis une console centralisée. On compte également un gestionnaire de mise à jour, référencé 3.5, permettant la gestion des mises à jours du logiciel résident par téléchargement de nouvelles parties de logiciel. On compte également un module de gestion de l'accès conditionnel, référencé 3.6, servant à vérifier que l'utilisateur possède bien les droits pour visualiser les flux reçus par exemple dans le cadre d'offres de télévision payante. Un module de contrôle de vidéo à la demande ( VOD pour « Video On Demand » en anglais) référencé 3.7 permet de gérer l'accès à des contenus diffusés à la demande. Un module de contrôle de la diffusion multipoint, référencé 3.8, est lui chargé de la gestion de la réception dans ce mode multipoint (« multicast » en anglais) des flux contenant les services de télévision. Un module de gestion de la liste des services, référencé 3.3, est chargé de récupérer et de maintenir la liste des services auxquels il peut prétendre.

Ces modules offrent donc une série de services, ces services utilisant les fonctionnalités du noyau système en ce sens qu'ils sont généralement lancés en tant que tâches gérées et ordonnancées par le noyau. En fonction de leurs besoins ils se servent de la couche de communication IP, voire des pilotes du matériel. Par exemple le module de contrôle d'accès va utiliser le pilote du module de lecture de carte à puce.

L'appareil, dans son ensemble est géré par une application, référencée 3.1, dont le but est d'offrir à l'utilisateur l'interface de fonctionnement de son appareil. Cette application va donc fournir un ensemble de fonctionnalités comme par exemple l'affichage, via le téléviseur connecté, de la liste des programmes disponibles, la possibilité de sélectionner un des programmes et la réception dudit programme par le décodeur. Chacune de ces fonctionnalités va utiliser les services des modules et du système lancés sur l'appareil pour son fonctionnement.

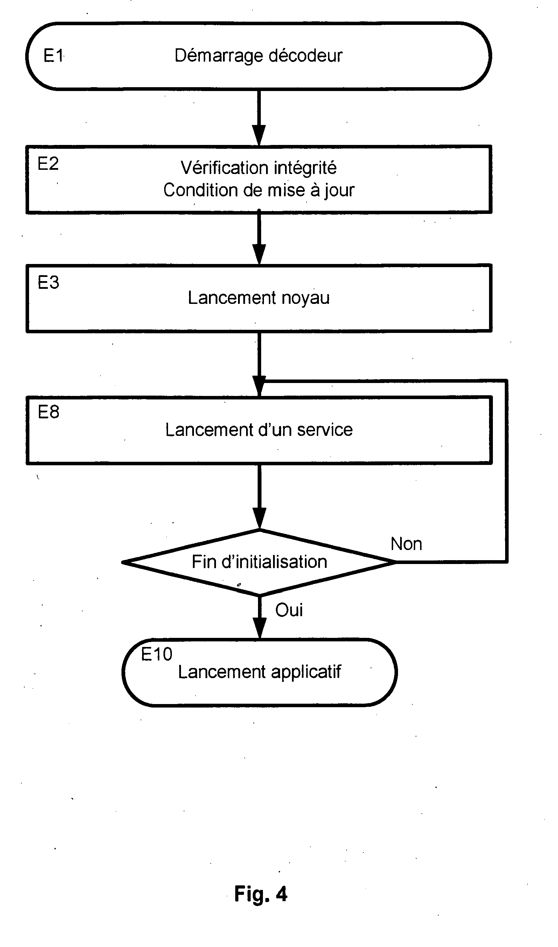

Cet ensemble de logiciel résident comprenant les pilotes, le noyau, les modules et l'application sont stockés en mémoire flash. Au démarrage de l'appareil, ces logiciels doivent généralement être chargés en mémoire vive et lancés dans une séquence illustrée figure 4. Dans une première étape, référencée E1, le décodeur démarre. Ensuite, dans une seconde étape, référencée E2, l'intégrité de l'image du logiciel résident, noyau, pilotes, modules de services et application est vérifiée. En effet pour ce qui est des corruptions du logiciel sauvegardé en mémoire flash, ou tout autre type de mémoire permanente, il est classique d'inclure un système de vérification de l'intégrité de ce logiciel et de téléchargement d'une version intègre de remplacement en cas de corruption. Ce système peut fonctionner sur la base de CRC (« Cyclic Redondancy Code » en anglais) ajoutant un code calculé sur l'intégralité du logiciel en mémoire. A un stade précoce du lancement du système, avant tout lancement de partie de code sauvegardé, un calcul de CRC est fait sur le code et comparé au code sauvegardé. En cas de divergence, une corruption est détectée et le téléchargement d'une version de remplacement est déclenché. Cette protection par CRC peut se faire sur l'ensemble du logiciel ou par module de code. De cette façon, il ne sera jamais tenté de lancer un code corrompu. Cette étape E2 vérifie également qu'une mise à jour du système n'est pas demandée, même en cas d'intégrité du système. En effet, dans certains cas, par exemple disponibilité d'une nouvelle version de logiciel résident pour le décodeur, ou pour toute autre raison, l'application peut demander le téléchargement d'un nouveau logiciel résident. Généralement cela se fait par indication dans un endroit connu de la mémoire d'un drapeau de téléchargement et des informations complémentaires nécessaires comme un identificateur de la version de logiciel souhaitée. Quand les conditions de mise à jour sont remplies, non intégrité ou téléchargement demandé, une version de logiciel résident est téléchargée et mise en mémoire en remplacement de la version existante. On est assuré, en sortie de cette étape que l'appareil possède une version intègre de logiciel résident. L'int égrité d'un logiciel est ici comprise comme le fait que chaque octet constituant la copie en mémoire de ce logiciel correspond bien à l'octet correspondant de la version de référence. Donc qu'aucun processus, physique ou logiciel, n'est venu modifier la valeur, corrompre, aucun de ces octets.

Ensuite, dans une seconde étape, référencée E3, le noyau système est chargé en mémoire et lancé. Ensuite, après avoir lancé les pilotes dans une étape non représentée sur le dessin, intervient le chargement et le lancement par le noyau système des services. Ces services sont lancés les uns après les autres comme illustré par l'étape E8 effectuée en boucle jusqu'à ce que tous les services soient lancés. Une fois que tous les services sont lancés l'application est lancée dans une étape E10. Le décodeur est alors fonctionnel et prêt à être utilisé.

On peut donc décomposer le lancement du logiciel en trois phases correspondant au lancement du noyau, au lancement des services et au lancement de l'application. Chacune de ses phases est susceptible de rencontrer des problèmes d'exécution. En fonction des différentes caractéristiques de chacune de ses phases, le type d'erreur, leur probabilité de se produire, leur conséquence sur le fonctionnement du système ainsi que les mesures correctrices envisageables sont différentes.

La phase de lancement du noyau se caractérise par un logiciel minimal qui va être exécuté sur le matériel. Ce logiciel ne prend généralement pas en compte de paramètres, ou un nombre limité de paramètres externes. Il est donc généralement possible de tester le fonctionnement du noyau de manière exhaustive. Nous avons un logiciel dont le fonctionnement reste relativement simple s'exécutant dans un environnement stable. La probabilité d'occurrence d'une erreur à ce stade est donc faible et généralement due à une défaillance matérielle ou à une corruption de la version stockée en mémoire flash.

La phase de lancement des services se caractérise quant à elle par des fonctionnalités plus complexes et donc un logiciel qu'il est moins facile de tester de manière exhaustive. De plus, nombre de ces modules vont utiliser des paramètres externes au cours de leur lancement. On peut citer, par exemple, le module de contrôle d'accès utilisant les informations présentes sur une carte à puce, le gestionnaire de liste de services va éventuellement chercher une liste de services sur le réseau ou va s'initialiser avec une liste sauvegardée lors d'une précédente utilisation. Il va également être courant pour un module d'utiliser des paramètres utilisateurs également sauvegardés lors d'une précédente utilisation. Les modules logiciels des services sont donc des programmes relativement complexes amenés à s'exécuter dans un environnement changeant. De ce fait leur test exhaustif, en fonction de toutes les valeurs que peuvent prendre leurs paramètres est généralement impossible à assurer. Ils sont également susceptibles de souffrir de défaillance matérielle ou de corruption de leur logiciel sauvegardé en mémoire.

La phase de lancement de l'application, quant à elle, va se caractériser comme la phase de lancement des services par une plus grande complexité et des conditions d'exécutions plus changeantes encore. En effet, son exécution, outre les différents paramètres qu'elle peut prendre en compte devra également interagir avec l'utilisateur et toutes les actions que celui-ci peut entreprendre vis à vis du décodeur. Il est également susceptible de souffrir de défaillance matérielle ou de corruption de son logiciel sauvegardé en mémoire.

Les différentes mesures que l'on peut adopter pour tenter de gérer au mieux ces erreurs vont être maintenant décrites.

Concernant les défaillances matérielles, on ne peut généralement rien faire, l'utilisateur devant apporter son appareil en réparation.

Il a été vu que le noyau souffrait principalement d'erreurs dues aux défaillances matérielles et à la corruption de son image logicielle sauvegardée. Aucun autre mécanisme de récupération d'erreur, n'est généralement prévu pour ce code.

L'application, quant à elle, dispose en outre généralement d'un mécanisme permettant de détecter des blocages dus à un problème logiciel survenant dans son exécution. Ce mécanisme connu sous le nom de compteur temporel de réinitialisation (« watchdog reset » en anglais) consiste pour le système à initialiser un compteur se décrémentant vers 0. D'une manière régulière, l'application va incrémenter ce compteur de façon à ce qu'il n'atteigne jamais la valeur 0. En cas de blocage de l'application, celle-ci n'est plus en mesure de venir incrémenter le compteur qui va donc atteindre la valeur nulle. Quand le compteur atteint la valeur 0, le système va déclencher une réinitialisation du système, un redémarrage du décodeur. Ce redémarrage suffit généralement à retrouver un état fonctionnel de l'appareil. Les problèmes survenant lors de la phase de fonctionnement de l'application étant généralement dus à son utilisation ou à l'occurrence de conditions externes, le redémarrage entraîne un nouveau lancement dans lequel ces conditions génératrices de problèmes ont disparues.

La phase de lancement des services, outre la corruption en mémoire du logiciel et les défaillances matérielles, peut souffrir de problèmes au lancement. En effet ces services sont d'une certaine complexité et de plus leur lancement peut dépendre de paramètres externes tels que la dernière liste de services ou les préférences utilisateur. Ces modules ne peuvent être testés de manière exhaustive avec toutes les valeurs de paramètres externes possibles. De ce fait, il peut se produire des blocages au lancement. Ces problèmes ne peuvent généralement pas se résoudre par un redémarrage de l'appareil, ce démarrage ne changeant pas les paramètres pris en compte. Des paramètres provoquant une erreur d'exécution du module, le faisant à chaque fois. Il peut donc arriver dans ce cas que l'on se retrouve dans une situation où un appareil lors de son démarrage souffre d'une erreur au lancement d'un module. Cette erreur provoque le redémarrage de l'appareil. L'erreur se reproduit au redémarrage et l'on est dans une boucle dont on ne peut plus sortir.

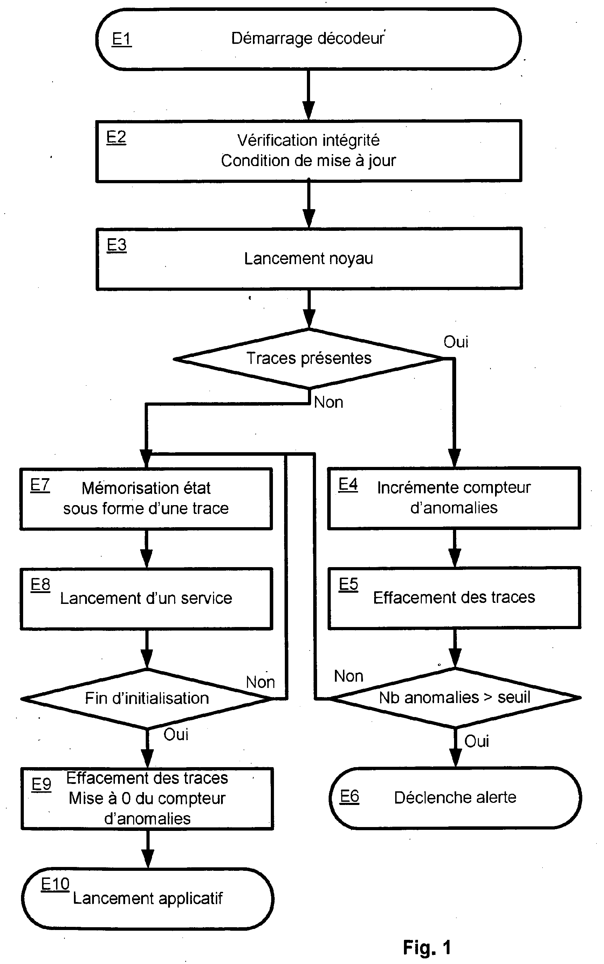

La figure 1 présente un schéma de démarrage selon un exemple de réalisation de l'invention permettant de détecter ce genre de situation et de prendre des mesures correctrices. L'exemple de réalisation repose sur le fait de mémoriser des points de passages lors de la phase de lancement des services. Cette mémorisation se fait par l'inscription de données appelées traces en mémoire. Ces traces seront effacées de la mémoire à l'issue de la phase de démarrage des services quand ce démarrage s'est bien passé. Par contre en cas de problème lors du lancement d'un des services, un redémarrage se produit sans que l'on atteigne le moment où ces traces sont effacées. Lors de ce démarrage, le fait de trouver des traces présentes en mémoire indiquera que le démarrage précédent n'est pas allé à son terme. D'autre part, la valeur de la trace permet d'identifier le service qui est la cause du problème. On démarre l'appareil dans une étape E1. Il s'ensuit une étape E2 de vérification de l'intégrité du logiciel de l'appareil et de déclenchement, si nécessaire, du téléchargement d'un nouveau logiciel résident. Vient ensuite l'étape E3 de lancement du noyau et des pilotes. A l'issue de cette étape E3, une vérification de la présence de traces inscrites en mémoire va être effectuée. En cas d'absence de traces, le démarrage précédent s'est donc bien déroulé, on va engager le processus de lancement des services. Cette information est mémorisée sous la forme d'une première trace par l'étape E7. On lance alors le premier service par une étape référencée E8. Ensuite on boucle sur ces étapes E7 et E8, en mémorisant à chaque fois lors de l'étape E7 l'état du processus de lancement des services. Cet état peut être une référence du dernier service lancé, ou du prochain que l'on va lancer par exemple. Quand tous les services ont été lancés, on procède à l'effacement des traces dans une étape E9. Cette étape va, dans l'exemple de réalisation, également mettre à 0 un compteur d'anomalies que nous détaillerons ci-dessous. Ensuite, le lancement des services s'étant bien passé, une étape E10 de lancement de l'applicatif vient terminer le processus de démarrage de l'appareil.

Lorsque le lancement d'un service échoue, cela se traduit par un redémarrage de l'appareil soit immédiat soit commandé par l'utilisateur suite à un blocage de l'appareil. En tout état de cause, ce redémarrage intervient sans que le processus de démarrage n'ait pu effectuer l'étape E9 d'effacement des traces. Donc lors du redémarrage, le test de présence des traces effectué à l'issue de l'étape E3 de lancement du noyau sera positif. Dans ce cas, une étape E4 consistera à incrémenter un compteur d'anomalies. Ce compteur va servir à compter le nombre de démarrage en échec se succédant. Les traces seront ensuite effacées dans une étape E5. L'ordre de ces deux étapes étant indifférent. Un test sera alors effectué pour tester le compteur d'anomalies par rapport à un seuil. Si ce seuil est dépassé une alerte sera déclenchée pour permettre d'entreprendre des actions correctrices. L'utilisation de ce compteur d'anomalies associé au test par rapport au seuil permet de ne déclencher une alerte qu'au bout d'un certain nombre de démarrages successifs engendrant une erreur. Cette utilisation est optionnelle, il est en effet possible de déclencher l'alerte dès le premier démarrage défectueux. Mais dans ce cas il est possible de déclencher des alertes alors que le problème vient, par exemple, d'une interruption accidentelle du processus de démarrage comme une coupure de courant où l'extinction de l'appareil par l'utilisateur. Tant que ce seuil n'est pas atteint, le démarrage sera tenté par l'exécution des étapes E7 à E10. Le seuil sera typiquement de quelques unités, 3 ou 5. Plus sa valeur sera élevée plus il faudra de démarrages défectueux pour déclencher l'alerte, moins il sera élevé, plus le risque de déclencher une alerte pour un problème accidentel sera élevé.

Il est possible d'envisager plusieurs types d'actions correctrices. Une première action possible est de remettre l'appareil dans une configuration par défaut. C'est à dire de repositionner tous les paramètres tels que le profil utilisateur, ses préférences, la liste des services aux valeurs par défaut. De cette manière on retrouve une configuration connue et testée permettant le redémarrage. On peut également désactiver le lancement du service fautif et effectué un redémarrage de l'appareil privé d'un ou plusieurs services. Cela induira vraisemblablement un fonctionnement dégradé mais qui peut permettre à l'utilisateur de corriger le problème. On peut aussi inscrire en mémoire une demande de téléchargement d'une nouvelle version de logiciel résident pour remettre l'appareil dans un état connu. Il est possible d'afficher un message à l'utilisateur. Il est également possible d'implémenter une stratégie de récupération où l'on va tenter dans un premier temps de remettre les paramètres à des valeurs par défauts, puis si ce n'est pas suffisant, de désactiver certains services pour finalement en cas d'échec de ses actions demander le téléchargement d'une nouvelle version de logiciel résident. Préférablement, l'utilisateur sera averti de la situation par des messages à l'écran ou tout autre moyen de communication comme l'activation de signaux spécifiques sur l'appareil.

L'exemple de réalisation ainsi décrit n'est pas limitatif. L'homme du métier comprend que des adaptations sont possibles. En particulier on peut remplacer l'effacement des traces par l'écriture d'un paramètre indiquant que le dernier démarrage s'est bien passé, paramètre qui sera initialisé à une valeur indiquant un problème avant la phase de lancement des services. Il est également évident que l'on peut combiner les actions correctrices de multiples manières sans sortir du cadre de l'invention. In est aussi possible de choisir différemment le moment et le contenu des traces inscrites en mémoire.

## Revendications

1. Procédé de détection d'erreurs survenant lors du démarrage d'un appareil électronique comportant de la mémoire permanente, cet appareil étant piloté par un logiciel résident, **caractérisé en ce que** le logiciel résident comprenant une pluralité de modules lancés successivement lors d'un démarrage, ledit procédé comprend au moins les étapes suivantes :
- lors d'un premier démarrage du logiciel résident, pour chaque module, au moins une étape d'inscription d'information représentative du lancement dudit module, dans la mémoire de l'appareil avant le lancement dudit module ;
- si ledit premier démarrage est sans erreur, une étape d'effacement de ladite information, pour tous les modules lancés ;
- lors d'un second démarrage du logiciel résident, une étape de détection d'une erreur survenue lors du premier démarrage en fonction d'une présence de ladite information dans la mémoire.

2. Procédé selon la revendication 1, **caractérisé en ce que** le procédé comprend une étape de détermination de module étant la cause d'une erreur survenue lors du premier démarrage par identification dans ladite information du dernier module lancé.

3. Procédé selon l'une des revendications 1 à 2 comprenant en outre le déclenchement d'une alerte suite à la détection d'au moins un démarrage précédent ayant généré une erreur.

4. Procédé selon la revendication 3 comprenant en outre une étape de remise à une valeur par défaut d'au moins un paramètre de l'appareil lorsqu'une alerte est déclenchée.

5. Procédé selon la revendication 3 comprenant en outre une étape de désactivation du lancement d'au moins un module lors du démarrage suivant de l'appareil lorsqu'une alerte est déclenchée.

6. Procédé selon la revendication 3 comprenant en outre une étape provoquant un téléchargement d'une nouvelle version de logiciel résident lorsqu'une alerte est déclenchée.

7. Procédé selon la revendication 3 comprenant en outre une étape provoquant l'affichage d'une information à destination de l'utilisateur lorsqu'une alerte est déclenchée.

8. Appareil électronique comportant de la mémoire permanente, un logiciel résident destiné à le piloter, des moyens de lancement du logiciel résident au démarrage de l'appareil, **caractérisé en ce que** le logiciel résident comprenant une pluralité de modules lancés successivement lors d'un démarrage, ledit appareil comporte en outre
des moyens d'inscription, dans la mémoire de l'appareil, pour chacun desdits modules, d'information représentative pour le lancement de chacun desdits modules avant le lancement de chaque module lors d'un premier démarrage du logiciel résident et
un moyen d'effacement de ladite information, pour chacun des modules lancés, si ledit premier démarrage est sans erreur et
des moyens de détection, lors d'un second démarrage, d'une erreur survenue lors dudit premier démarrage du logiciel résident en fonction d'une présence de ladite information dans la mémoire.

9. Appareil selon la revendication 8 comportant en outre des moyens de déclenchement d'une alerte suite à la détection d'au moins un démarrage précédent ayant généré une erreur.

10. Appareil selon la revendication 9 comportant en outre des moyens de remise à une valeur par défaut d'au moins un paramètre de l'appareil lorsqu'une alerte est déclenchée.

11. Appareil selon la revendication 9 comportant en outre des moyens de désactivation du lancement d'au moins un module lors du démarrage suivant de l'appareil lorsqu'une alerte est déclenchée.

12. Appareil selon la revendication 9 comportant en outre des moyens de provoquer un téléchargement d'une nouvelle version de logiciel résident lorsqu'une alerte est déclenchée.

13. Appareil selon la revendication 9 comportant en outre des moyens d'affichage d'une information à destination de l'utilisateur lorsqu'une alerte est déclenchée

## Claims

1. Method of detection of errors arising during the startup of an electronic device comprising permanent memory, this device being controlled by a resident software, **characterized in that** the resident software comprising a plurality of modules launched successively during a startup, said method comprising at least the following steps:
- during a first startup of the resident software, for each module, at least one step of writing information representative of the launching of said module, into the device's memory before a launching of said module;
- if said first startup is without error, a step of deleting of said information, for all of the launched modules;
- during a second startup of the resident software, a step of detection of an error arisen during the first startup as a function of a presence of said information in the memory.

2. Method according to claim 1 **characterized in that** the method comprises a step of determination of a module being the cause of an error arisen during the first startup by identification in said information of a last launched module.

3. Method according to one of claims 1 to 2 moreover comprising the triggering of an alarm following the detection of at least one previous startup having generated an error.

4. Method according to claim 3, moreover comprising a step of restoring to a default value of at least one parameter of the device when an alarm is triggered.

5. Method according to claim 3, moreover comprising a step of deactivation of the launching of at least one module during the next startup of the device when an alarm is triggered.

6. Method according to claim 3, moreover comprising a step of provoking a download of a new version of resident software when an alarm is triggered.

7. Method according to claim 3, moreover comprising a step of provoking the display of information destined for the user when an alarm is triggered.

8. Electronic device comprising permanent memory, a resident software designed to control it, means for launching of the resident software upon startup of the device, **characterized in that** the resident software comprising a plurality of modules launched successively during a startup, said device moreover comprising
- means for writing, in the memory of the device, for each of said modules, of information representative of the launching of each of said modules before the launching of each module during a first startup of the resident software and
- means for deletion of said information, for each of said launched modules, if said first startup is without error and
- means for detection, during a second startup, of an error arisen during said first startup of the resident software as a function of a presence of said information in the memory.

9. Device according to claim 8 moreover comprising means for triggering an alarm following the detection of at least one previous startup having generated an error.

10. Device according to claim 9, moreover comprising means for resetting to a default value of at least one parameter of the device when an alarm is triggered.

11. Device according to claim 9, moreover comprising means for deactivation of the launching of at least one module during the next startup of the device when an alarm is triggered.

12. Device according to claim 9, moreover comprising means for provoking a download of a new version of resident software when an alarm is triggered.

13. Device according to claim 9, moreover comprising means for displaying information destined to the user when an alarm is triggered.

## Patentansprüche

1. Verfahren zum Detektieren von Fehlern, die bei der Initialisierung eines elektronischen Geräts mit einem Festspeicher auftreten, wobei dieses Gerät durch eine residente Software gesteuert wird, **dadurch gekennzeichnet, dass** das Verfahren mindestens die folgenden Schritte umfasst, wobei die residente Software eine Vielzahl von Modulen umfasst, die bei einer Initialisierung sukzessive gestartet werden:
- bei einer ersten Initialisierung der residenten Software für jedes Modul mindestens einen Schritt des Schreibens einer für das Starten des Moduls repräsentativen Information in den Speicher des Geräts vor dem Starten des Moduls,
- wenn die erste Initialisierung fehlerfrei ist, einen Schritt des Löschens der Information für alle gestarteten Module,
- bei einer zweiten Initialisierung der residenten Software einen Schritt des Detektierens eines bei der ersten Initialisierung aufgetretenen Fehlers in Abhängigkeit von einem Vorhandensein der Information in dem Speicher.

2. Verfahren nach Anspruch 1, **dadurch gekennzeichnet, dass** das Verfahren einen Schritt der Bestimmung eines Moduls als Ursache eines Fehlers, der bei der ersten Initialisierung aufgetreten ist, durch Erkennen der Information des letzten gestarteten Moduls umfasst.

3. Verfahren nach einem der Ansprüche 1 bis 2, umfassend ferner das Auslösen eines Alarms aufgrund der Detektion einer vorigen Initialisierung, die einen Fehler erzeugt hat.

4. Verfahren nach Anspruch 3, umfassend ferner einen Schritt des Zurücksetzens mindestens eines Parameters des Geräts auf einen Vorgabewert, wenn ein Alarm ausgelöst wird.

5. Verfahren nach Anspruch 3, umfassend ferner einen Schritt des Deaktivierens des Startens mindestens eines Moduls bei der nächsten Initialisierung des Geräts, wenn ein Alarm ausgelöst wird.

6. Verfahren nach Anspruch 3, umfassend ferner einen Schritt, der ein Herunterladen einer neuen Version der residenten Software bewirkt, wenn ein Alarm ausgelöst wird.

7. Verfahren nach Anspruch 3, umfassend ferner einen Schritt, der die Anzeige einer Information für den Benutzer bewirkt, wenn ein Alarm ausgelöst wird.

8. Elektronisches Gerät mit einem Festspeicher, einer residenten Software zu dessen Steuerung, Mitteln zum Starten der residenten Software bei der Initialisierung des Geräts, **dadurch gekennzeichnet, dass** die residente Software eine Vielzahl von Modulen umfasst, die bei einer Initialisierung sukzessive gestartet werden, wobei das Gerät ferner Folgendes aufweist:
- Mittel, um für jedes der Module eine für das Starten jedes der Module repräsentative Information in den Speicher des Geräts vor dem Starten jedes Moduls bei einer ersten Initialisierung der residenten Software zu schreiben, und
- ein Mittel, um die Information für jedes der gestarteten Module zu löschen, wenn die erste Initialisierung fehlerfrei ist, und
- Mittel, um bei einer zweiten Initialisierung einen bei der ersten Initialisierung der residenten Software aufgetretenen Fehler in Abhängigkeit von einem Vorhandensein der Information in dem Speicher zu detektieren.

9. Gerät nach Anspruch 8, ferner mit Mitteln zum Auslösen eines Alarms aufgrund der Detektion mindestens einer vorigen Initialisierung, die einen Fehler erzeugt hat.

10. Gerät nach Anspruch 9, umfassend ferner Mittel, um mindestens einen Parameter des Geräts auf einen Vorgabewert zurückzusetzen, wenn ein Alarm ausgelöst wird.

11. Gerät nach Anspruch 9, umfassend ferner Mittel, um das Starten mindestens eines Moduls bei der nächsten Initialisierung des Geräts zu deaktivieren, wenn ein Alarm ausgelöst wird.

12. Gerät nach Anspruch 9, umfassend ferner Mittel, um ein Herunterladen einer neuen Version der residenten Software zu bewirken, wenn ein Alarm ausgelöst wird.

13. Gerät nach Anspruch 9, umfassend ferner Mittel, um eine Information für den Benutzer anzuzeigen, wenn ein Alarm ausgelöst wird.
